# EUROPEAN PATENT SPECIFICATION

(11) **EP 3 028 158 B1**
(45) Date of publication and mention of the grant of the patent: **26.10.2022**
(21) Application number: 13890532.8
(22) Date of filing: 31.07.2013
(51) Int. Cl.: G06F 17/16, G06Q 20/14, G06Q 20/18, G06F 3/12, G07F 17/26, G06F 13/00

(54) **AUTHORIZING MARKING AGENT CONSUMPTION AT DISCOVERED PRINTERS**
AUTORISIERUNG EINES MARKIERUNGSMITTELVERBRAUCHS IN ERKANNTEN DRUCKERN
AUTORISATION DE CONSOMMATION D'AGENTS DE MARQUAGE DANS DES IMPRIMANTES DÉTECTÉES

(43) Date of publication of application: 08.06.2016
(73) Proprietor: Hewlett-Packard Development Company, L.P., Spring TX 77389 (US)
(72) Inventor: FERNANDES, Lenin, Bangalore 560 103 Karnataka (IN); GANESAN, Kumaravel, Bangalore 560 103 Karnataka (IN); BHATIA, Rajesh, Bangalore 560 103 Karnataka (IN)
(74) Representative: EIP
(86) International application number: PCT/IN2013/000474
(87) International publication number: WO 2015/015503

(56) References cited:
- EP-A2- 1 164 768
- EP-A2- 2 306 300
- WO-A1-2009/137762
- CN-A- 102 761 537
- JP-A- 2002 024 585
- US-A1- 2008 123 857
- US-A1- 2010 107 097
- US-A1- 2011 276 986
- US-A1- 2013 103 575

## Description

### BACKGROUND

Certain printers are capable of receiving communications and printable content via the internet without being connected to a desktop computer, notebook computer, or other host computing device. An advantage of such a printer is that print jobs can be received for printing from other computing devices located anywhere around the globe.

Patent application EP2306300 A2 discloses a terminal device that stores a browser application including an add-on program which is installed in the browser application and sends data to a printing device.

### BRIEF DESCRIPTION OF THE DRAWINGS

The accompanying drawings illustrate various examples and are a part of the specification. The illustrated examples do not limit the scope of the claims. Throughout the drawings, identical reference numbers designate similar, but not necessarily identical elements.
FIG. 1 is a block diagram depicting an example of a system for authorizing marking agent consumption at discovered printers.
FIG. 2 is a block diagram depicting an example of a system for authorizing marking agent consumption at discovered printers.
FIG. 3 is a flow diagram depicting steps taken to implement an example.
FIG. 4 is a flow diagram depicting steps taken to implement an example.

### DETAILED DESCRIPTION OF EXAMPLES

Providers of ink, toner, and other marking agents for printers are challenged to provide the marking agent to consumers in a manner that is reliable, minimizes interruptions, e.g., periods during which printing cannot occur due to a marking agent outage, and is easy for the printer user. One approach to these challenges is to provide a larger than typical supply of marking agent at a printer, and to periodically provide authorization messages or credits to the printer via the internet, with each message to enable the printer to consume a portion of marking agent from the onboard supply according to a subscription. In certain examples, a marking agent provider may maintain, or frequently reestablish, a network connection to a printer in order to deliver marking agent consumption credits to the printer. In some implementations, a marking agent provider may send marking agent consumption credits to the printer multiple times per day.

Setting up a marking agent subscription service for a printer can be a challenging task for some users, though, particularly if the service is being set up in conjunction with the setup of print-by-email functionality for a newly purchased printer. During the marking agent subscription and email printing setup processes a user typically is asked to enter a printer identification claim code or other printer identification data at one or more web pages. For example, a user may be instructed, e.g., pursuant to installation instructions on media provided with the printer, or pursuant to instructions at a web page, to provide a marking agent subscription service with a printer identification code serial number, or other unique printer identification data to enable the subscription service to identify the printer on a network and send marking agent credits to the printer. This task is prone to result in errors, though, as users will have difficulty obtaining and/or replicating the requested printer identification information. In an example, some users may have difficulty in accessing the number via a touchscreen or other interface at the printer. In another example, some users will receive a print out of the printer identification number during a setup routine, but will in turn lose or fail to understand the significance of the printed printer identification number. Lack of a solid understanding of what to do with the printer identification number will be even more likely if the user is asked to provide the printer identification number via web pages to an email printing service as well as a marking agent subscription service. Such errors may in turn generate support calls to the manufacturer of the printer and/or the marking agent provider, and lead to customers dropping out of the marking agent subscription program. Significant user dissatisfaction can occur, and may extend to the marking agent subscription service, the email printing service, the printing device, and the provider of the printer.

To address these issues, examples described herein provide a system and method for discovering printers and authorizing marking agent consumption at the discovered printers with reliability and with minimal user action. In one example of the disclosure, a user may connect a printer to a Wi-Fi, Bluetooth, or other wireless connection. The printer may be a new printer that is connected, or is to be connected, to an onboard supply of marking agent. The user may interact with a computing device to access a web application associated with the marking agent subscription service, and to send to the host computer system, via the web application, a message, code or other data indicative of the marking agent subscription that is to apply to the printer. The marking agent subscription is to authorize the printer to consume a subscription amount of marking agent from the supply. Responsive to receipt of the subscription data, the host computer system sends to the computing device, also via the web application, a browser plug-in software application.

As a result of installation of the plug-in at the computing device, the computing device is enabled to automatically discover the printer via the wireless connection. Following the computing device's discovery of the printer via the browser plug-in, the computing device obtains a printer identification number, or other unique printer identification data from the printer via the browser plug-in. The computing device in turn sends the received printer identification data to the host computer system via the browser plug-in. Responsive to receiving the printer identification data from the computing device, the host computer system utilizes the printer identification data to establish an operative connection (e.g., via the Internet) with the printer. The host computer system may then send to the printer, via the operative connection, a marking agent credit to authorize the printer to consume at least a portion of the subscription amount of marking agent from the supply. In certain examples of the disclosure, the host computer system may store the received printer identification data in association with an email address established for the printer. In examples, the host computer system, responsive to receiving an email addressed to the email address and including a print job, may send the job to the printer for printing via the established operative connection.

In this manner, a user can easily and reliably activate a subscription to utilize a supply of marking agent that is onboard at a new printer, and activate an email-to-print functionality at the printer, without any need to access, remember, and/or provide a printer identification claim code. Printer users will appreciate the simplified user experience made possible by the disclosure, and customer satisfaction with subscription marking agent services, print-by-email services, and internet-connected printers generally will increase.

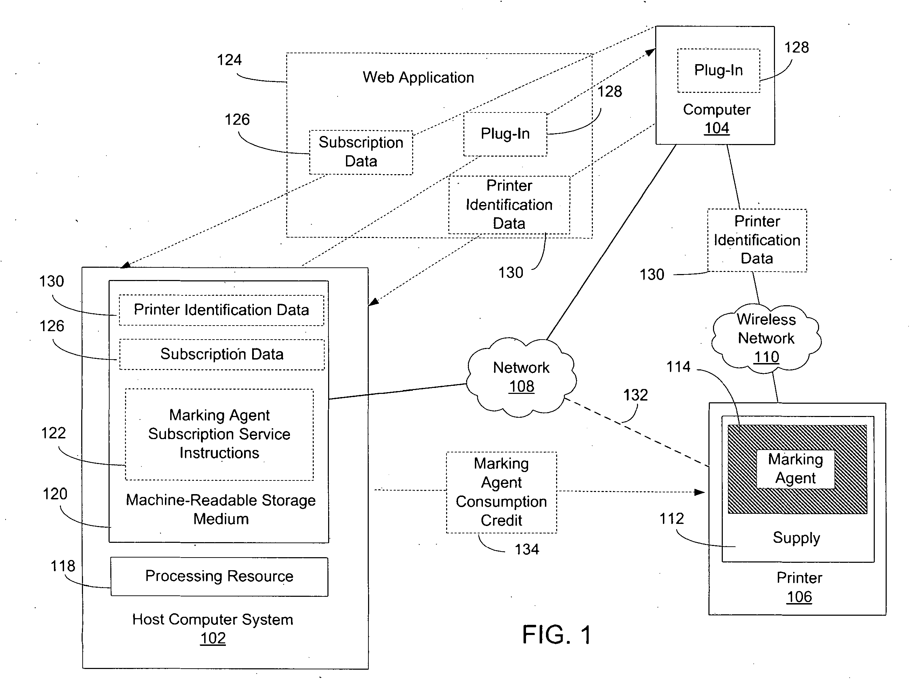

Referring now to the drawings, FIG. 1 is a block diagram depicting an example of a system for authorizing marking agent consumption at discovered printers. FIG. 1 shows a host computer system 102 operatively connected to a computer 104 via a network 108, and a printer 106 that has connected to a wireless network 110. I

Host computer system 102 represents generally any computing device or group of computing devices configured to send and receive network requests, send and receive data, including receiving subscription data from computer 104, sending a browser plug-in to computer 104, receiving printer identification data from computer 104, and sending marking agent consumption credits to printer 106 when an operative connection is established with printer 106, and/or to otherwise communicate with computer 104, printer 106, and other computing devices via the network 108. Computer 104 represents generally any computing device or group of computing devices configured to send and receive network requests, send and receive data, including sending subscription data to host computer system 102, receiving a browser plug-in from host computer system 102, receiving printer identification data from printer 106 via a wireless connection, and/or to otherwise communicate with host computer system 102 and other computing devices via the network 108 and to otherwise communicate with printer 106 and other computing devices via the wireless network.

Printer 106 represents generally any electronic device or group of electronic devices operable to consume a marking agent to produce a printed print job or printed content. Printer 106 is operable to send and receive network requests, including sending printer identification data to computer 104 via a wireless connection, and receiving marking agent consumption credits from host computer system 102 upon establishment of an operative network connection with host computer system 102. Printer 106 may be additionally operable to otherwise communicate with host computer system 102 via the network 108 and with computer 104 via the wireless network 110.

In the example of FIG. 1, the printer 106 is a printer connected to a supply 118 of marking agent 120. As used herein, a "printer" is synonymous with "printing device", and in examples may refer to a liquid inkjet printer, solid toner-based printer, liquid toner-based printer, a multifunctional device that performs a function such as scanning and/or copying in addition to printing, or any other electronic device or group of electronic devices that consume a marking agent to produce a printed print job or printed content. As used herein, "marking agent" refers to any substance that can be consumed by a printer during a printing operation, including but not limited to aqueous inks, solvent inks, UV-curable inks, dye sublimation inks, latex inks, toners, and powders. As used herein, "consuming" or "consumption" of marking agent refers to expending by use. In an example, consumption of marking agent may refer to a using up of marking agent. In another example, consumption of marking agent may refers to a dispensing or ejection of marking agent, e.g., a dispensing or ejection of marking agent upon a media.

Network 108 represents generally hardware components and computers interconnected by communications channels that allow sharing of resources and information. Network 108 may include a cable, wireless, fiber optic, or remote connection via a telecommunication link, an infrared link, a radio frequency link, or some combination of these, or any other connectors or systems that provide electronic communication. Network 108 may also include intermediate proxies, routers, switches, load balancers, and the like. The paths followed by network 108 between host computer system 102, computer 104, and printer 106 as depicted in FIG. 1 represent the logical communication paths between these devices, not necessarily the physical paths between the devices.

Wireless network 110 represents generally hardware components and/or computers, interconnected by communications channels that allow sharing of resources and information via a wireless connection. As used herein, a "wireless connection" refers to a transfer of data between two devices, e.g., between two computing devices, that are not connected by an electrical conductor. A wireless connection may be via a wireless communication protocol or wireless standard for exchanging data. Examples of wireless connections include, but are not limited to, Wi-Fi connections, Bluetooth connections, and infrared connections. Wireless network 110 may include a remote connection via a telecommunication link, an infrared link, a radio frequency link, or some combination of these, or any other connectors or systems that provide electronic communication. Wireless network 110 may also include intermediate proxies, routers, switches, load balancers, and the like. The paths followed by wireless network 110 between computer 104 and printer 106 as depicted in FIG. 1 represent the logical communication paths between these devices, not necessarily the physical paths between the devices.

In an example, host computer system 102 includes a processing resource 118 and a machine-readable storage medium 120 encoded with marking agent subscription service instructions 122. In an example, the marking agent subscription service instructions 122 cause the host computer system 102 to implement a service to authorize marking agent consumption at discovered printers. As used herein, a "processing resource" and a "processor" are used synonymously and refer generally to any instruction execution system, such as a computer/processor based system or an ASIC (Application Specific Integrated Circuit), a computer, or other system that can fetch or obtain instructions or logic stored in a memory and execute the instructions or logic contained therein. In examples, a processing resource or processor may be at least one of a central processing unit (CPU), a semiconductor-based microprocessor, a graphics processing unit (GPU), a field-programmable gate array (FPGA) configured to retrieve and execute instructions, other electronic circuitry suitable for the retrieval and execution of instructions stored on a machine-readable storage medium, or a combination thereof. In examples described herein, a processor may include, for example, one processor or multiple processors included in a single computing device or distributed across multiple computing devices. As used herein, a "machine-readable storage medium" may be any electronic, magnetic, optical, or other physical storage apparatus to contain or store information such as executable instructions, data, and the like. For example, any machine-readable storage medium described herein may be any of Random Access Memory (RAM), flash memory, a storage drive (e.g., a hard disk), any type of storage disc (e.g., a Compact Disc Read Only Memory (CD-ROM), any other type of compact disc, a DVD, etc.), and the like, or a combination thereof. Further, any machine-readable storage medium described herein may be non-transitory.

In the example of FIG. 1, a user may connect a printer 106 to a wireless network 110. In this example, the printer 106 may be a new printer that has been shipped to the user such that the printer at time setup is connected to an onboard supply 112 of marking agent 114. In an example, the user of the printer 106 may then interact with a computer 104 to access a marking agent subscription service web application 124 that provides, a connection with the marking agent subscription service operating at host computer 102. As used herein, "web application" refers to a computer software application or web page that is coded in a browser-supported language (such as XML, HTML, or HTML with JavaScript) and is reliant on a web browser application to render the application executable (or in the case of a web page, presentable). Examples of web applications are web pages, webmail, online search engines, online sale and auction sites, and wikis. In an example, the web application 124 may be hosted by the host computer system 102. In another example, the web application 124 may be a web application hosted by a computing device or computer system separate from host computer system 102.

Continuing with the example of FIG. 1, the user causes the computer 104 to send to the host computer system 102, via the web application 124, a message, code or other subscription data 126 indicative of the marking agent subscription that is to apply to the printer 106. The marking agent subscription is to authorize the printer 106 to consume a subscription amount of marking agent 114 from the supply 112. In examples, a marking agent subscription may refer to a right, contract, pledge, or other arrangement to authorize a printer to dispense or consume a subscription amount of a marking agent for a sum paid, or a fee agreed to be paid. In another example, the subscription amount may be expressed as a quantity of marking agent to be dispensed or consumed by the printer (e.g. picoliters of ink, cubic millimeters of toner, etc.). In another example, the subscription amount may be expressed as a number of pages authorized for printing. For example, the subscription amount of marking agent authorized for consumption may be measured in "pages", wherein a "page" is an average marking agent distribution for a sheet or length of media, and the average is utilized in calculating marking agent consumption for each media sheets or lengths to be printed to print a job. In another example wherein the subscription amount of marking agent to be consumed is measured in "pages", a "page" may be a measurement classification that is equivalent to a volume measurement, e.g., "1 page = X picoliters of marking agent", wherein "X" is a variable representing a number greater than zero.

As used in this disclosure, a "subscription" is not limited to an arrangement where the fee is prepaid. In an example, the subscription data 126 may be representative of a subscription arrangement, where the fee is to be paid after the consumption of the marking agent. In a particular example, the fee to be paid to a provider pursuant to a subscription may be a fee to be paid at the end of a measuring period (e.g., end of month), e.g. $Y at the end of each month to authorize a subscription amount that is a predetermined consumption of marking agent 114, e.g., ink to print 500 document pages at the printer 106. "Y" is a variable representing a number greater than zero. A particular example of a subscription for utilization of marking agent 114 at the printer 106, and an authorized subscription amount, follows:
Subscription Amount = $Z/month, 100 marking agent pages included per month, $1 per 20 pages for additional pages per month, with payment due: 30 days after an end of month usage report (wherein "Z" is a variable representing a number greater than zero).

In one example, the subscription data 126 provided by computer 104 may include a starter subscription code that was included in the printer's retail packaging, and was in turn provided to the web application 124 via user interaction with the computer 104. In another example, the subscription data 126 may be provided as the result of a user at computer 104 selecting a marking agent subscription from among multiple subscription alternatives presented by the web application 124.

Responsive to receipt of the subscription data 126 via the web application 124, the host computer system 102 sends to the computer 104 a browser plug-in software application 128. The plug-in 128 is also sent via the web application 124. As used herein, a "web browser" or "browser" refers to a software application configured to enable a computer to traverse sites or information (e.g.,. a web page) on a network (e.g., an internet or intranet). As used herein, a "browser plug-in" or "plug-in" refers to software or programming that adds a specific capability or feature to an existing browser.

The plugin-in 128 is downloaded and installed at the computer 104, and as a result, the computer 104 is enabled to automatically discover the printer 106 via the wireless connection 110. Once the plug-in 128 is downloaded within the browser, the plug-in may behave like a local executable which runs on the computer 104. The plug-in 128 uses the local wireless network 110 (e.g., local Wi-Fi) to discover the printer 106 and in some examples may discover other wireless devices within range of the wireless network 110. In an example, the plug-in 128 may cause display of a notice that the computer's wireless functionality should be activated or switched on. In another example, the plug-in 128 may activate or switch on the computer's 104 wireless communication functionality.

Following the computing device's 104 discovery of the printer 106 via the browser plug-in 128, the computer 104 obtains printer identification data 130 from the printer 106 via the installed browser plug-in 128. In an example, the installed plug-in 128 may behave like a local executable running on the computer 104, and cause the host computer system 102 to exchanges messages with the printer 106 over the network 108 to obtain the printer identification data 130 for printer 106. In an example, the printer identification data 130 may be a printer identification number that is unique to the printer, so as to distinguish the printer 106 from other printers and other computing devices on a network. In an example, the printer identification data 130 may be an identifier that was assigned or created in the printer's software or firmware during manufacture or setup, such that a user of the printer 106 is not aware of the printer identification data 130 at the time of printer setup. In another example, a user of the printer 106 may be made aware of the printer identification number during printer setup operations at the printer 106 or at the computer 104. The computer 104 in turn utilizes the browser plug-in 128 to send the received printer identification data 130 to the host computer system 102.

Upon receiving the printer identification data 130 from the computer 104 via the plug-in 128, the host computer system 102 utilizes the printer identification data 130 to establish an operative connection 132 via the network 108 with the printer 106. The host computer system 102 may then send to the printer 106, via the operative connection 132, a marking agent credit 134 to authorize the printer 106 to consume at least a portion of the subscription amount of marking agent 114 from the supply 112.

As used herein, a "marking agent credit" refers to data indicative that a printer is authorized to consume at least a portion of the subscription amount of marking agent from a marking agent supply. In an example, the credit is to authorize consumption of less than the subscription amount. In an example, a provider of marking agent may send periodically marking agent credits that are less than the full amount of the subscription in order to reduce the risk that a user new to or unrecognized by the service could take advantage by using the large allocation of marking agent with no intent to pay for the marking agent according to a subscription's "pay after" payment terms. In another example, the credit may be to authorize consumption of a marking agent amount equal to the subscription quantity, such that credit amount is a fulfillment of the current subscription quantity. In yet another example, the credit may be to authorize consumption of a marking agent amount greater than the subscription quantity, such that the credit amount is an advance toward a next period subscription quantity.

Even though a single marking agent consumption credit 134 is shown in FIG. 1, the host computer system 102 may provide a plurality of marking agent consumption credits 134 at different intervals of times, such as one credit 134 per day. In an example, if the subscription data 126 relates to a monthly subscription for printing at the printer 106, the host computer system 102 may send a marking agent consumption credit 134 every day to the printer 106 indicating a total amount of pages available to the printer 106 at the time the credit 134 is sent. In other examples, how computer system 102 may send marking agent credits 134 to the printer multiple times in a day, e.g., every six hours, every three hours, hourly, or more often than hourly.

In examples, the receiving of subscription data 126 and the receiving of the printer identification data 130 from the computer 104, and the sending of the sending of the plug-in 128 to the computer 104 and the sending of the marking agent consumption credit 134 to the printer 106 over the network 108 may be via a networking protocol. The networking protocols utilized may include, but are not limited to, Transmission Control Protocol/Internet Protocol ("TCP/IP"), HyperText Transfer Protocol ("HTTP"), and/or Session Initiation Protocol ("SIP").

Processing resource 118 may fetch, decode, and execute instructions 122 stored on storage medium 120 to implement the functionalities disclosed herein. In examples, decoding may include decrypting. In examples, storage medium 120 may include additional instructions. In examples, instructions 122 and any other instructions described herein in relation to storage medium 120 may be stored on a machine-readable storage medium remote from, but accessible to, host computer system 102 and processing resource 118. In examples, the functionalities of any of the instructions of storage medium 120 may be implemented in the form of electronic circuitry, in the form of executable instructions encoded on a machine readable storage medium, or a combination thereof.

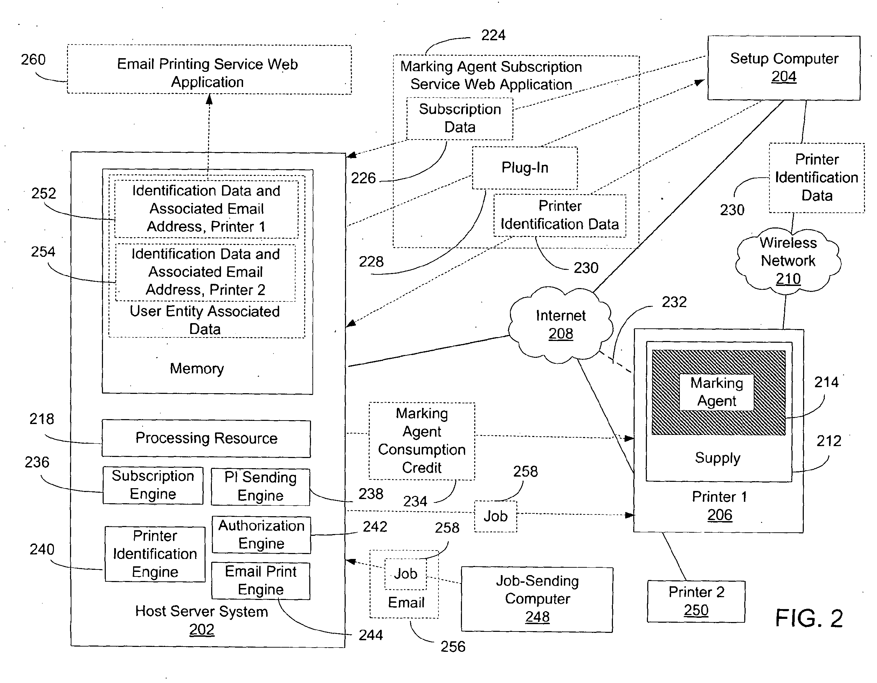

In examples, host computer system 102 may be any sort of a computing device. In some examples, host computer system 102 may implement at least a portion of a service to enable authorization of marking agent consumption at discovered printers. In some examples, instructions 122 may be part of a larger set of instructions implementing a service to authorize marking agent consumption at discovered printers. In some examples, portions of the service may be implemented on different computing devices. In some examples, the marking agent subscription instructions 122 may be part of an installation package that, when installed, may be executed by processing resource 118 to implement the functionalities described herein in relation to the instructions 122. In such examples, storage medium 120 may be a portable medium, such as a CD, DVD, or flash drive, or a memory maintained by a server from which the installation package can be downloaded and installed. In other examples, the instructions 122 may be part of an application or applications already installed on authorization host computer system 102 including processing resource 118. In such examples, the storage medium 120 may include memory such as a hard drive, solid state drive, or the like. In some examples, functionalities described herein in relation to FIG. 1 may be provided in combination with functionalities described herein in relation to any of FIGS. 2-4.

FIG. 2 is a block diagram depicting an example of a system for authorizing marking agent consumption at discovered printers. FIG. 2 depicts examples of physical and logical components for implementing various embodiments, including components are identified as engines 236, 238, 240, 242, and 244. In describing engines 236, 238, 240, 242, and 244, focus is on each engine's designated function. The term engine, as used herein, refers to a combination of hardware and programming configured to perform a designated function. However, in different examples, more, fewer, and/or other components, arrangements of components, etc. may be used according to the teachings described herein. In addition, various engines and other components described herein may be implemented as one or more software components, hardware components, special purpose hardware (e.g., application specific hardware, application specific integrated circuits (ASICs), embedded controllers, hardwired circuitry, etc.), or some combination of these.

FIG. 2 shows a host server system 202 operatively connected to a setup computer 204, a job-sending computer 248, and a printer two 250 via an internet 208, and a printer one 206 that is connected to a wireless network 210.

Host server system 202 represents generally any computing device or group of computing devices configured to send and receive network requests, send and receive data, including receiving subscription data from setup computer 204, sending a browser plug-in to setup computer 204, receiving printer identification data from setup computer 204, sending marking agent consumption credits to printer one 206 when an operative connection is established with printer one 206, receiving an email that includes a print job from job-sending computer 248, sending the print job to printer one via the operative connection, and/or to otherwise communicate with setup computer 204, job-sending computer 248, printer one 206, printer two 250, and other computing devices via the internet 208.

Setup computer 204 and job-sender computer 248 each represents generally any computing device or group of computing devices configured to send and receive network requests, send and receive data, and/or to otherwise communicate with host server system 202 and other computing devices via the internet 208.

Printer one 206 and printer two 250 each represents generally any electronic device or group of electronic devices operable to consume a marking agent to produce a printed print job or printed content. Printer one 206 is operable to send and receive network requests and data, including sending printer identification data to setup computer 204 via a wireless connection ,and receiving marking agent consumption credits from host server system 202 upon establishment of an operative network connection with host server system 202. In the example of FIG. 2, printer one 206 is a printer connected to, or to be connected to, a supply 218 of marking agent 220. Second printer 206 is operable to send and receive network requests and data, to host server system 202 via the internet 208.

Internet 208 may include, at least in part, an intranet, the internet, or a combination of both. The paths followed by internet 208 between the host server system 202, setup computer 204, the job sending computer 248, printer one 206, and printer two 250 as depicted in FIG. 2 represent the logical communication paths between these devices, not necessarily the physical paths between the devices.

Wireless network 210 represents generally hardware components and/or computers interconnected by communications channels that allow sharing of resources and information via a wireless connection. The paths followed by wireless network 210 between setup computer 204 and printer one 206 as depicted in FIG. 2 represent the logical communication paths between these devices, not necessarily the physical paths between the devices.

In the example of FIG. 2, printer one 206 is connected, or is to be connected, to a supply 212 of marking agent 214, and printer one 206 is subject to a marking agent subscription that authorizes the first printer to consume a subscription amount of marking agent 214. A user of printer one 206 may connect printer one 206 to a Wi-Fi, Bluetooth, or other wireless network 210. In an example, the user subsequently interacts with the setup computer 204 to access a marking agent subscription service web application 224 that provides a connection with the marking agent subscription service operating at host computer 202. The setup computer 204 sends to the host server system 202, via the web application 224, a message, code or other subscription data 226 indicative of the marking agent subscription that applies to printer one 206.

The subscription engine 236 causes the host server system 202 to receive the subscription data 226. Responsive to receipt of the subscription data 226, the plug-in sending engine 238 causes the host server system 202 to send to the computing device, via the marking agent subscription service web application 204, a browser plug-in software application 228 to facilitate discover of printer one 206 via the wireless connection 210. The plugin-in 228 is installed at the setup computer 204, and as a result, the setup computer 204 is enabled to automatically discover printer one 206 via the wireless connection 210.

Following the computing device's 204 discovery of printer one 206 via the browser plug-in 228, the setup computer 204 obtains printer identification data 230 from printer one 206 via the installed browser plug-in 228. The setup computer 204 in turn utilizes the browser plug-in 228 to send the received printer identification data 230 to the host server system 202. The printer identification engine 240 causes the server system 202 to receive the printer identification data 230 from the setup computer 204.

Continuing with the example of FIG. 2, following the receipt of the printer identification data 230 for printer one 206 at the host server system 202, the email print engine 244 causes the host server system 202 to store the identification data 230 for the first printer in association with an email address 252 for printer one 206. As used herein, an "email" refers to a message sent electronically from one email address to another email address. In some examples of email systems, the sending and receiving users' computers are not required to be online simultaneously. An "email address" refers to a character string, text, image, graphic, or other element that identifies an address from which electronic messages may be sent, or to which electronic messages may be delivered.

Continuing with the example of FIG. 2, the printer identification engine 240 may identify a printer two 250 and possibly other printers assigned to or otherwise associated with the same user entity to which printer one 206 is assigned. The printer identification engine 240 may then cause the host server system 202 to store the printer identification data 230 for printer one 206 in association with identification data and any email addresses 254 for printer two 250, and with identification data and any email addresses for the other printers assigned to or otherwise associated with the same user entity.

In an embodiment, the printer identification engine 240 may cause the host server system 202 to provide the printer identification data and the email addresses for the printers associated with a user entity (in this example including printer one 206 and printer two 250) to a second web application 260 that is an email printing service application 260. As used herein, an "email printing service web application" refers to a web application that serves as a portal for setup up of a printer, e.g., printer one 206, such that users can send content for printing to an email address assigned to the printer. In an example, in this manner printer identification data 230 may be shared amongst the marking agent subscription service web application 224 and the email printing service web application 260 such that a user of a printer, e.g., printer one 206, is not required to supply the printer identification data 230 to either service.

Continuing with the example of FIG. 2, at a time following the storage of the email address for printer one 206 at the host server system 202, job-sending computer 248 sends an email 256 that contains a print job 258 to the host server system 202, and the email print engine 244 causes the host server system 202 to receive the email 256. As used herein, a "print job" refers to content and/or instructions as to formatting and presentation of the content sent to a computer system for printing. In examples, a "print job" may be stored in a programming language and/or a numerical form so that the job can be stored and used in computing devices, servers, printers and other machines capable of performing calculations and manipulating data. In an example, the print job 258 may be included in the email 256 as an attachment, e.g., an attached document or image file. In another example, the print job 258 may be included as text within a body of the email 256. In other examples, the host server system 202 may receive the print job 258 from the job-sending computer 248 by means other than email delivery.

The printer identification engine 240 causes the host server system 202 to utilize the printer identification data 230 to establish an operative connection 232 via the internet 208 with printer one 206. The authorization engine 242 then causes the host server system 202 to send to printer one 206, via the operative connection 232, a marking agent credit 234 to authorize printer one 206 to consume at least a portion of the subscription amount of marking agent 214 from the supply 212.

At a time after receipt and storage of the printer identification data 230 from the setup computer 204 via the plug-in 228, and after receipt of the email 256 that includes the print job 258, and after the establishment of the operative connection 232 between the host server system 202 and printer one 206, the email print engine 244 causes the host server system 202 to send the print job 258 to printer one 206 utilizing the printer identification data 230. In an example, the print job 258 is sent to printer one 206 utilizing an address that includes at least a portion of the identification data 230. In a particular example, the email print engine 244 may, prior to sending the print job 258 to printer one 206, cause the host server system 202 or another computing device or system to perform a rasterization process upon the print job. As used herein, a "rasterization process" refers to raster processing or other processing of an image to a bitmap format.

In an example, the functions and operations described with respect to the subscription engine 236, the plug-in sending engine 238, the printer identification engine 240, the authorization engine 242, the email print engine 244, and the host server system 202 may be implemented as a non-transitory computer-readable storage medium containing instructions executed by a processor (e.g., processing resource 218) and stored in a memory (e.g., memory 246). In a given implementation, processing resource 218 may represent multiple processors, and memory 246 may represent multiple memories.

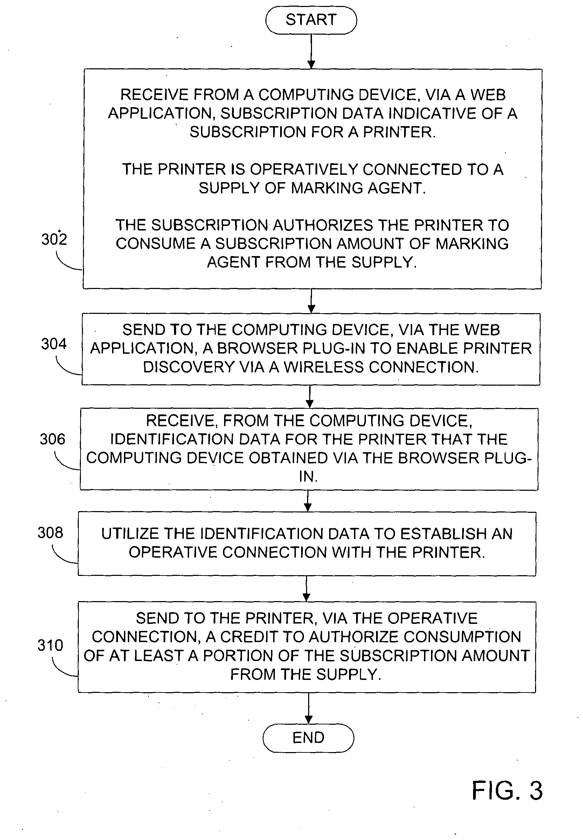

FIG. 3 is a flow diagram of operation in a system according to various examples. In discussing FIG. 3, reference may be made to the diagrams of FIGS. 1 and 2 to provide contextual examples. Implementation, however, is not limited to those examples. Starting with FIG. 3, data indicative of a subscription for a printer is received from a computing device via a web application. The printer is operatively connected to a supply of marking agent. The subscription authorizes the printer to consume a subscription amount of marking agent from the supply (block 302). Referring back to FIGS. 1 and 2, the marking agent subscription service instructions 122 (FIG. 1), when executed by processing resource 118 (FIG. 1), or the subscription engine 236 (FIG. 2), may be responsible for implementing block 302.

Continuing with FIG. 3, a browser plug-in is sent to the computing device via the web application. The browser plug-in is to enable printer discovery via a wireless connection (block 304). Referring back to FIGS. 1 and 2, the marking agent subscription service instructions 122 (FIG. 1), when executed by processing resource 118 (FIG.1), or the plug-in sending engine 238 (FIG. 2), may be responsible for implementing block 304.

Continuing with FIG. 3, identification data for the printer is received from the computing device. The computing device had obtained the identification data from the printer via the browser plug-in (block 306). Referring back to FIGS. 1 and 2, the marking agent subscription service instructions 122 (FIG. 1), when executed by processing resource 118 (FIG. 1), or the printer identification engine 240 (FIG. 2), may be responsible for implementing block 306.

Continuing with FIG. 3, the identification data is utilized to establish an operative connection with the printer (block 308). Referring back to FIGS. 1 and 2, the marking agent subscription service instructions 122 (FIG. 1), when executed by processing resource 118 (FIG. 1), or the printer identification engine 240 (FIG. 2), may be responsible for implementing block 308.

Continuing with FIG. 3, a marking agent credit is sent to the printer via the operative connection. The marking agent credit to authorize consumption of at least a portion of the subscription amount from the supply (block 310). Referring back to FIGS. 1 and 2, the marking agent subscription service instructions 122 (FIG. 1), when executed by processing resource 118 (FIG. 1), or the authorization engine 242 (FIG. 2), may be responsible for implementing block 310.

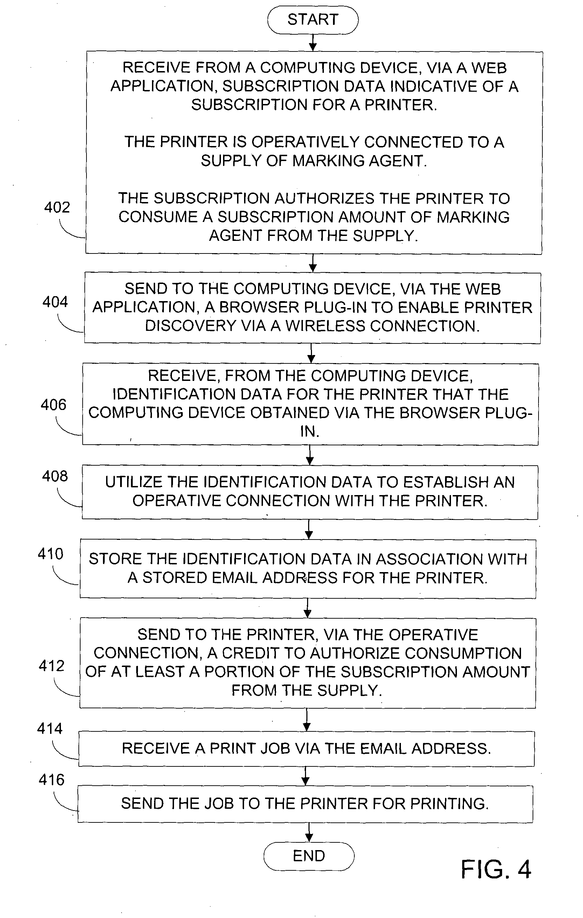

FIG. 4 is a flow diagram of operation in a system according to various examples. In discussing FIG. 4, reference may be made to the diagrams of FIGS: 1 and 2 to provide contextual examples. Implementation, however, is not limited to those examples. Starting with FIG. 4, data indicative of a subscription for a printer is received from a computing device via a web application. The printer is operatively connected to a supply of marking agent. The subscription authorizes the printer to consume a subscription amount of marking agent from the supply (block 402). Referring back to FIGS. 1 and 2, the marking agent subscription service instructions 122 (FIG. 1), when executed by processing resource 118 (FIG. 1), or the subscription engine 236 (FIG. 2), may be responsible for implementing block 402.

Continuing with FIG. 4, a browser plug-in is sent to the computing device via the web application. The browser plug-in is to enable printer discovery via a wireless connection (block 404). Referring back to FIGS. 1 and 2, the marking agent subscription service instructions 122 (FIG. 1), when executed by processing resource 118 (FIG. 1), or the plug-in sending engine 238 (FIG. 2), may be responsible for implementing block 404.

Continuing with FIG. 4, identification data for the printer is received from the computing device. The computing device had obtained the identification data from the printer via the browser plug-in (block 406). Referring back to FIGS. 1 and 2, the marking agent subscription service instructions 122 (FIG. 1), when executed by processing resource 118 (FIG. 1), or the printer identification engine 240 (FIG. 2), may be responsible for implementing block 406.

Continuing with FIG. 4, the identification data is utilized to establish an operative connection with the printer (block 408). Referring back to FIGS. 1 and 2, the marking agent subscription service instructions 122 (FIG. 1), when executed by processing resource 118 (FIG. 1), or the printer identification engine 240 (FIG. 2), may be responsible for implementing block 408.

Continuing with FIG. 4, the identification data is stored in association with an email address for the printer (block 410). Referring back to FIGS. 1 and 2, the marking agent subscription service instructions 122 (FIG. 1), when executed by processing resource 118 (FIG. 1), or the email print engine 244 (FIG. 2), may be responsible for implementing block 410.

Continuing with FIG. 4, a marking agent credit is sent to the printer via the operative connection. The marking agent credit to authorize consumption of at least a portion of the subscription amount from the supply (block 412). Referring back to FIGS. 1 and 2, the marking agent subscription service instructions 122 (FIG. 1), when executed by processing resource 118 (FIG. 1), or the authorization engine 242 (FIG. 2), may be responsible for implementing block 412.

Continuing with FIG. 4, a print job is received via the email address (block 414). Referring back to FIGS. 1 and 2, the marking agent subscription service instructions 122 (FIG. 1), when executed by processing resource 118 (FIG. 1), or the email print engine 244 (FIG. 2), may be responsible for implementing block 414.

Continuing with FIG. 4, the job is sent to the printer for printing (block 416). Referring back to FIGS. 1 and 2, the marking agent subscription service instructions 122 (FIG. 1), when executed by processing resource 118 (FIG. 1), or the email print engine 244 (FIG. 2), may be responsible for implementing block 416.

## Claims

1. A non-transitory machine-readable storage medium comprising instructions that, when executed by a processing resource, cause a system, comprising a host computer (102), a computer (104) connected via a network (108) to the host computer (102), and a printer (106) that has connected to a wireless network, to:
receive, by the host computer (102) from the computer (104), via a web application (124), subscription data (126) indicative of a subscription for the printer (106), wherein the printer (106) is connected to a supply of marking agent (114),
the subscription authorizes the printer (106) to consume a subscription amount of marking agent (114);
send, from the host computer (102) to the computer (104), via the web application (124), a browser plug-in (128) to enable the computer (104) to discover the printer (106) via a wireless connection and to obtain, via the browser plug-in, printer identification data (130) from the printer (106);
receive, by the host computer (102) from the computer (104), the printer identification data (130) via the browser plug-in (128);
utilize, at the host computer (102), the identification data (130) to establish an operative connection with the printer (106); and
send, from the host computer (102) to the printer (106), via the operative connection, a credit (134) to authorize consumption of at least a portion of the subscription amount from the supply;
store in association, on the host computer (102), the identification data and an email address for the printer (106);
receive, by the host computer (102), a print job via the email address; and
send, by the host computer (102), the job to the printer (106) for printing.

2. The medium of claim 1,
wherein the web application (124) is a first web application that is a marking agent subscription service application; and
wherein the instructions cause the system to provide the identification data and the email address to a second web application that is an email printing service application.

3. The medium of claim 1,
wherein the printer (106) is a first printer and the identification data is first identification data;
wherein the first identification data is stored in association with a user entity; and
wherein the instructions cause the system to identify a second printer that is associated with the user entity, and to store the first identification data in association with a second identification data for the second printer.

4. The medium of claim 1, wherein the wireless connection is a Wi-Fi or a Bluetooth connection.

5. The medium of claim 1, wherein the job is sent to the printer (106) utilizing the identification data.

6. A system comprising a host computer (102) and a computer (104) connected via a network (108) to the host computer (102) and a printer (106) that has connected to a wireless network (110), the host computer (102) comprising:
a subscription engine (236), to receive from the computer (104), via a web application (124), data that is indicative of a subscription, wherein the subscription is for the printer (106) operatively connected to a supply of marking agent (114), and
authorizes consumption by the printer (106), from the supply, of a subscription amount of marking agent (114);
a plug-in sending engine (238), to send a browser plug-in (128) to the computer (104) via the web application (124), the browser plug-in (128) to facilitate discovery of the printer via a wireless connection and to obtain printer identification data (130) from the printer (106);
a printer identification engine (240), to receive printer identification data (130) that was obtained by the computer from the printer (106) through utilization of the browser plug-in (128); and utilize the identification data to establish an operative connection with the printer (106); and
an authorization engine (242), to send to the printer (106), via the operative connection, a credit (134) to authorize printer consumption of at least a portion of the subscription amount;
an email print engine (244), to:
store a printer email address in correlation with the identification data (130);
receive an email, sent to the email address, the email including a print job; and
send the job to the printer (106).

7. The system of claim 6,
wherein the email print engine (242) performs a rasterization operation upon the job before sending the job to the printer (106).

8. The system of claim 6,
wherein the identification data (130) is first identification data;
wherein the printer (106) is a first printer and is assigned to a user entity;
wherein the printer identification engine (240) is to identify a plurality of other printers assigned to the user entity, and is to store the first identification data in association with identification data for the plurality of printers.

9. The system of claim 6, wherein the job is sent to the printer utilizing an address that includes at least a portion of the identification data (130).

10. A processor-implemented method, comprising:
receiving (302) by a host computer system from a computing device, via a web application, subscription data (126) indicative of a subscription for a printer (106), wherein the printer (106) is operatively connected to a supply of marking agent (114),
the subscription authorizes the printer (106) to consume a subscription amount of marking agent from the supply;
sending (304), with a processing resource of the host computer system, a browser plug-in (128) to the computing device via the web application, the plug-in to enable printer discovery via a wireless connection and to obtain, via the browser plug-in, printer identification data (130) from the printer (106);
receiving (306), by the host computer system from the computing device (104), the identification data (130) for the printer (106) that the computing device obtained via the browser plug- in (128);
utilizing (308), by a host computer system, the identification data (130) to establish an operative connection with the printer (106); and
sending (310), by a host computer system to the printer, via the operative connection, a credit to authorize consumption of at least a portion of the subscription amount from the supply;
storing in association, on the host computer (102), the identification data and an email address for the printer;
receiving, by the host computer (102), a print job via the email address; and
sending, by the host computer (102), the job to the printer (106) for printing.

11. The method of claim 10, wherein the job is sent to the printer utilizing an
address that incorporates at least a portion of the identification data (130).

12. The method of claim 10, wherein the subscription data (126) is received as a result of a user selection of a marking agent subscription from a plurality of subscription alternatives presented by the web application.

13. The method of claim 10,
wherein the printer (106) is a first printer and the identification data (130) is first identification data;
wherein the first identification data (130) is stored in association with entity data indicative of a user entity associated with the first printer; and
further comprising identifying a second printer that is associated with the user entity, and storing the first identification data in association with second identification data that identifies the second printer.

## Patentansprüche

1. Ein nicht flüchtiges maschinenlesbares Speichermedium, das Anweisungen umfasst, die, wenn sie mittels einer Verarbeitungsressource ausgeführt werden, ein System, das einen Hostcomputer (102), einen Computer (104), der über ein Netzwerk (108) mit dem Host-Computer (102) verbunden ist, und einen Drucker (106), der mit einem drahtlosen Netzwerk verbunden ist, umfasst, zu Folgendem veranlassen:
Empfangen, mittels des Host-Computers (102) von dem Computer (104) über eine Web-Anwendung (124) von Abonnementdaten (126), die bezeichnend für ein Abonnement für den Drucker (106) sind, wobei der Drucker (106) mit einem Vorrat an Markierungsmittel (114) verbunden ist,
wobei das Abonnement den Drucker (106) autorisiert, eine Abonnementmenge an Markierungsmittel (114) zu verbrauchen;
Senden, von dem Host-Computer (102) an den Computer (104) über die Web-Anwendung (124) eines Browser-Plug-in (128), um den Computer (104) zu aktivieren, den Drucker (106) über eine drahtlose Verbindung zu erkennen und über das Browser-Plug-in Druckeridentifikationsdaten (130) von dem Drucker (106) zu erhalten;
Empfangen, mittels des Host-Computers (102) von dem Computer (104), der Druckeridentifikationsdaten (130) über das Browser-Plug-in (128);
Verwenden, an dem Host-Computer (102) der Identifikationsdaten (130), um eine betriebsbereite Verbindung mit dem Drucker (106) herzustellen; und
Senden, von dem Host-Computer (102) an den Drucker (106) über die betriebsbereite Verbindung, eines Guthabens (134), um den Verbrauch von mindestens einem Anteil der Abonnementmenge von dem Vorrat zu autorisieren;
Speichern in Verknüpfung, auf dem Host-Computer (102), der Identifikationsdaten und einer E-Mail-Adresse für den Drucker (106);
Empfangen, mittels des Host-Computers (102), eines Druckauftrags über die E-Mail-Adresse; und
Senden, mittels des Host-Computers (102), des Auftrags an den Drucker (106) zum Drucken.

2. Medium nach Anspruch 1,
wobei die Web-Anwendung (124) eine erste Web-Anwendung ist, die eine Markierungsmittelabonnementdienstanwendung ist; und
wobei die Anweisungen das System veranlassen, die Identifikationsdaten und die E-Mail-Adresse an eine zweite Web-Anwendung, die eine E-Mail-Druckdienstanwendung ist, bereitzustellen.

3. Medium nach Anspruch 1,
wobei der Drucker (106) ein erster Drucker ist und die Identifikationsdaten erste Identifikationsdaten sind;
wobei die ersten Identifikationsdaten in Verknüpfung mit einer Benutzerdateneinheit gespeichert werden; und
wobei die Anweisungen das System veranlassen, einen zweiten Drucker zu identifizieren, der mit der Benutzerdateneinheit verknüpft ist, und die ersten Identifikationsdaten in Verknüpfung mit zweiten Identifikationsdaten für den zweiten Drucker zu speichern.

4. Medium nach Anspruch 1, wobei die drahtlose Verbindung eine Wi-Fi- oder eine Bluetooth-Verbindung ist.

5. Medium nach Anspruch 1, wobei der Auftrag an den Drucker (106) unter Verwenden der Identifikationsdaten gesendet wird.

6. System, das einen Host-Computer (102) und einen Computer (104), der über ein Netzwerk (108) mit dem Host-Computer (102) verbunden ist und einen Drucker (106), der mit einem drahtlosen Netzwerk (110) verbunden ist, umfasst, wobei der Host-Computer (102) Folgendes umfasst:
eine Abonnementmaschine (236), die dazu dient, von dem Computer (104) über eine Web-Anwendung (124) Daten, die bezeichnend für ein Abonnement sind, zu empfangen, wobei das Abonnement für den Drucker (106) mit einem Vorrat an Markierungsmittel (114) wirkverbunden ist und
einen Verbrauch, mittels des Druckers (106) von dem Vorrat, einer Abonnementmenge an Markierungsmittel (114) autorisiert;
eine Plug-in-Sendemaschine (238), die dazu dient, ein Browser-Plug-in (128) an den Computer (104) über die Web-Anwendung (124) zu senden, wobei das Browser-Plug-in (128) dazu dient, ein Erkennen des Druckers über eine drahtlose Verbindung zu ermöglichen und Druckeridentifikationsdaten (130) von dem Drucker (106) zu erhalten;
eine Druckeridentifikationsmaschine (240), die dazu dient Druckeridentifikationsdaten (130) zu empfangen, die mittels des Computers von dem Drucker (106) durch Verwendung des Browser-Plug-in (128) erhalten wurden; und die Identifikationsdaten zu verwenden, um eine betriebsbereite Verbindung mit dem Drucker (106) herzustellen; und
eine Autorisierungsmaschine (242), die dazu dient, an den Drucker (106) über die betriebsbereite Verbindung, ein Guthaben (134) zu senden, um den Druckerverbrauch von mindestens einem Anteil der Abonnementmenge zu autorisieren;
eine E-Mail-Druckmaschine (244), die zu Folgendem dient:
Speichern einer Drucker-E-Mail-Adresse in Korrelation mit den Identifikationsdaten (130);
Erhalten, einer E-Mail, die an die E-Mail-Adresse gesendet wird, wobei die E-Mail einen Druckauftrag beinhaltet; und
Senden des Jobs an den Drucker (106).

7. System nach Anspruch 6,
wobei die E-Mail-Druckmaschine (242) einen Rasterungsbetrieb an dem Auftrag vor einem Senden des Auftrags an den Drucker (106) durchführt.

8. System nach Anspruch 6,
wobei die Identifikationsdaten (130) erste Identifikationsdaten sind;
wobei der Drucker (106) ein erster Drucker ist und einer Benutzerdateneinheit zugeordnet ist;
wobei die Druckeridentifikationsmaschine (240) dazu dient, eine Vielzahl von anderen Druckern zu identifizieren, die der Benutzerdateneinheit zugeordnet sind, und dazu dient, die ersten Identifikationsdaten in Verknüpfung mit Identifikationsdaten für die Vielzahl von Druckern zu speichern.

9. System nach Anspruch 6,
wobei der Auftrag an den Drucker gesendet wird, unter Verwenden einer Adresse, die mindestens einen Anteil der Identifikationsdaten (130) beinhaltet.

10. Prozessorimplementiertes Verfahren, das Folgendes umfasst:
Empfangen (302), mittels eines Host-Computersystems von einer Rechenvorrichtung, über eine Web-Anwendung von Abonnementdaten (126), die bezeichnend für ein Abonnement für einen Drucker (106) sind, wobei der Drucker (106) mit einem Vorrat an Markierungsmittel (114) wirkverbunden ist,
wobei das Abonnement den Drucker (106) autorisiert, eine Abonnementmenge an Markierungsmittel von dem Vorrat zu verbrauchen;
Senden (304), mit einer Verarbeitungsressource des Host-Computersystems, eines Browser-Plug-in (128) an die Rechenvorrichtung über die Web-Anwendung, wobei das Plug-in dazu dient, eine Druckererkennung über eine drahtlose Verbindung zu aktivieren und über das Browser-Plugin, Druckeridentifikationsdaten (130) von dem Drucker (106) zu erhalten;
Empfangen (306), mittels des Host-Computersystems von der Rechenvorrichtung (104), der Identifikationsdaten (130) für den Drucker (106), die die Rechenvorrichtung über das Browser-Plug-in (128) erhalten hat;
Verwenden (308), mittels eines Host-Computersystems, der Identifikationsdaten (130), um eine betriebsbereite Verbindung mit dem Drucker (106) herzustellen; und
Senden (310), mittels eines Host-Computersystem an den Drucker, über die betriebsbereite Verbindung, eines Guthabens, um den Verbrauch von mindestens einem Anteil der Abonnementmenge von dem Vorrat zu autorisieren;
Speichern in Verknüpfung, auf dem Host-Computer (102), der Identifikationsdaten und einer E-Mail-Adresse für den Drucker;
Empfangen, mittels des Host-Computers (102), eines Druckauftrags über die E-Mail-Adresse; und
Senden, mittels des Host-Computers (102), des Auftrags an den Drucker (106) zum Drucken.

11. Verfahren nach Anspruch 10,
wobei der Auftrag an den Drucker gesendet wird, unter Verwenden einer Adresse, die mindestens einen Anteil der Identifikationsdaten (130) einschließt.

12. Verfahren nach Anspruch 10,
wobei die Abonnementdaten (126) empfangen werden als
ein Ergebnis einer Benutzerauswahl eines Markierungsmittelabonnements von einer Vielzahl von Abonnementalternativen, die mittels der Web-Anwendung dargestellt werden.

13. Verfahren nach Anspruch 10,
wobei der Drucker (106) ein erster Drucker ist und die Identifikationsdaten (130) erste Identifikationsdaten sind;
wobei die ersten Identifikationsdaten (130) in Verknüpfung mit Dateneinheitsdaten gespeichert werden, die bezeichnend für eine Benutzerdateneinheit sind, die mit dem ersten Drucker verknüpft ist; und
das ferner ein Identifizieren eines zweiten Druckers, der mit der Benutzerdateneinheit verknüpft ist, umfasst, und die ersten Identifikationsdaten in Verknüpfung mit zweiten Identifikationsdaten, die den zweiten Drucker identifizieren, speichert.

## Revendications

1. Support de stockage lisible par machine non transitoire comprenant des instructions qui, lorsqu'elles sont exécutées par une ressource de traitement, amènent un système, comprenant un ordinateur hôte (102), un ordinateur (104) connecté par l'intermédiaire d'un réseau (108) à l'ordinateur hôte (102) et une imprimante (106) qui s'est connectée à un réseau sans fil pour :
recevoir, par l'ordinateur hôte (102) depuis l'ordinateur (104), par l'intermédiaire d'une application Web (124), des données d'abonnement (126) indicatives d'un abonnement pour l'imprimante (106), l'imprimante (106) étant connectée à une fourniture d'agent de marquage (114), l'abonnement autorisant l'imprimante (106) à consommer un montant d'abonnement d'agent de marquage (114) ;
envoyer, à partir de l'ordinateur hôte (102) à l'ordinateur (104), par l'intermédiaire de l'application Web (124), un module externe de navigation (128) pour permettre à l'ordinateur (104) de découvrir l'imprimante (106) par l'intermédiaire d'une connexion sans fil et pour obtenir, par l'intermédiaire du module externe de navigation, des données d'identification d'imprimante (130) à partir de l'imprimante (106) ;
recevoir, par l'ordinateur hôte (102) à partir de l'ordinateur (104), les données d'identification d'imprimante (130) par l'intermédiaire du module externe de navigation (128) ;
utiliser, au niveau de l'ordinateur hôte (102), les données d'identification (130) pour établir une connexion opérationnelle avec l'imprimante (106) ; et
envoyer, à partir de l'ordinateur hôte (102) à l'imprimante (106), par l'intermédiaire de la connexion opérationnelle, un crédit (134) pour autoriser la consommation d'au moins une partie du montant de l'abonnement à partir de la fourniture ;
stocker en association, sur l'ordinateur hôte (102), les données d'identification et une adresse email de l'imprimante (106) ;
recevoir, par l'ordinateur hôte (102), une tâche d'impression par l'intermédiaire de l'adresse e-mail ; et
envoyer, par l'ordinateur hôte (102), la tâche à l'imprimante (106) pour impression.

2. Support selon la revendication 1,
l'application Web (124) étant une première application Web qui est une application de service d'abonnement d'agent de marquage ; et
les instructions amenant le système à fournir les données d'identification et l'adresse électronique à une seconde application Web qui est une application de service d'impression de courrier électronique.

3. Support selon la revendication 1,
l'imprimante (106) étant une première imprimante et les données d'identification sont des premières données d'identification ;
les premières données d'identification étant stockées en association avec une entité utilisateur ; et
les instructions amenant le système à identifier une seconde imprimante qui est associée à l'entité utilisateur et à stocker les premières données d'identification en association avec des secondes données d'identification pour la seconde imprimante.

4. Support selon la revendication 1, dans lequel la connexion sans fil est une connexion Wi-Fi ou Bluetooth.

5. Support selon la revendication 1, dans lequel la tâche est envoyée à l'imprimante (106) en utilisant les données d'identification.

6. Système comprenant un ordinateur hôte (102) et un ordinateur (104) connecté par l'intermédiaire d'un réseau (108) à l'ordinateur hôte (102) et une imprimante (106) qui est connectée à un réseau sans fil (110), l'ordinateur hôte (102) comprenant :
un moteur d'abonnement (236) pour recevoir à partir de l'ordinateur (104), par l'intermédiaire d'une application Web (124), des données qui indiquent un abonnement, l'abonnement étant destiné à l'imprimante (106) connectée de manière opérationnelle à une fourniture en agent de marquage (114), et
autorisant la consommation par l'imprimante (106), à partir de la fourniture, d'un montant d'abonnement d'agent de marquage (114) ;
un moteur d'envoi de module externe (238), pour envoyer un module externe de navigation (128) à l'ordinateur (104) par l'intermédiaire de l'application Web (124), le module externe de navigation (128) pour faciliter la découverte de l'imprimante par l'intermédiaire d'une connexion sans fil et pour obtenir des données d'identification d'imprimante (130) à partir de l'imprimante (106) ;
un moteur d'identification d'imprimante (240), pour recevoir des données d'identification d'imprimante (130) qui ont été obtenues par l'ordinateur à partir de l'imprimante (106) grâce à l'utilisation du module externe de navigation (128) ; et l'utilisation des données d'identification pour établir une connexion opérationnelle avec l'imprimante (106) ; et
un moteur d'autorisation (242), pour envoyer à l'imprimante (106), par l'intermédiaire de la connexion opérationnelle, un crédit (134) pour autoriser la consommation de l'imprimante d'au moins une partie du montant de l'abonnement ;
un moteur d'impression de courrier électronique (244), pour :
stocker une adresse e-mail d'imprimante en corrélation avec les données d'identification (130) ;
recevoir un e-mail, envoyé à l'adresse e-mail, l'e-mail comportant une tâche d'impression ; et
envoyer la tâche à l'imprimante (106).

7. Système selon la revendication 6,
le moteur d'impression de courrier électronique (242) effectuant une opération de tramage sur la tâche avant d'envoyer la tâche à l'imprimante (106).

8. Système selon la revendication 6,
les données d'identification (130) étant des premières données d'identification ;
l'imprimante (106) étant une première imprimante et étant attribuée à une entité utilisateur ;
le moteur d'identification d'imprimante (240) devant identifier une pluralité d'autres imprimantes attribuées à l'entité utilisateur et devant stocker les premières données d'identification en association avec des données d'identification pour la pluralité d'imprimantes.

9. Système selon la revendication 6,
la tâche étant envoyée à l'imprimante utilisant une adresse qui comporte au moins une partie des données d'identification (130).

10. Procédé mis en œuvre par un processeur, comprenant :
la réception (302), par un système informatique hôte à partir d'un dispositif informatique, par l'intermédiaire d'une application Web, des données d'abonnement (126) indicatives d'un abonnement pour une imprimante (106), l'imprimante (106) étant connectée de manière opérationnelle à une fourniture en agent de marquage (114),
l'abonnement autorise l'imprimante (106) à consommer un montant d'abonnement d'agent de marquage à partir de la fourniture ;
l'envoi (304), avec une ressource de traitement du système informatique hôte, d'un module externe de navigation (128) au dispositif informatique par l'intermédiaire de l'application Web, le module externe pour permettre la découverte de l'imprimante par l'intermédiaire d'une connexion sans fil et pour obtenir, par l'intermédiaire du module externe de navigation, des données d'identification d'imprimante (130) à partir de l'imprimante (106) ;
la réception (306), par le système informatique hôte à partir du dispositif informatique (104), des données d'identification (130) pour l'imprimante (106) que le dispositif informatique a obtenues par l'intermédiaire du module externe de navigation (128) ;
l'utilisation (308), par un système informatique hôte, des données d'identification (130) pour établir une connexion opérationnelle avec l'imprimante (106) ; et
l'envoi (310), par un système informatique hôte à l'imprimante, par l'intermédiaire de la connexion opérationnelle, d'un crédit pour autoriser la consommation d'au moins une partie du montant de l'abonnement à partir de la fourniture ;
le stockage en association, sur l'ordinateur hôte (102), des données d'identification et une adresse e-mail de l'imprimante ;
la réception, par l'ordinateur hôte (102), d'une tâche d'impression par l'intermédiaire de l'adresse e-mail ; et
l'envoi, par l'ordinateur hôte (102), de la tâche à l'imprimante (106) pour impression.

11. Procédé selon la revendication 10,
la tâche étant envoyée à l'imprimante utilisant une adresse qui incorpore au moins une partie des données d'identification (130).

12. Procédé selon la revendication 10,
les données d'abonnement (126) étant reçues en tant qu'un résultat d'une sélection par l'utilisateur d'un abonnement d'agent de marquage parmi une pluralité d'alternatives d'abonnement présentées par l'application Web.

13. Procédé selon la revendication 10,
l'imprimante (106) étant une première imprimante et les données d'identification (130) étant des premières données d'identification ;
les premières données d'identification (130) étant stockées en association avec des données d'entité indicatives d'une entité utilisateur associée à la première imprimante ; et
comprenant en outre l'identification d'une seconde imprimante qui est associée à l'entité utilisateur et le stockage des premières données d'identification en association avec des secondes données d'identification qui identifient la seconde imprimante.
